# FASCICULE DE BREVET EUROPEEN

(11) **EP 4 054 893 B1**
(45) Date de publication et mention de la délivrance du brevet: **18.10.2023**
(21) Numéro de dépôt: 20807840.2
(22) Date de dépôt: 28.10.2020
(51) Int. Cl.: B60N 3/06

(54) **REPOSE-PIED POUR VÉHICULE DOTÉ D'UNE ZONE FRANGIBLE**
MIT EINER BRUCHZONE AUSGEFUSTATTETE FUSSSTÜTZE FÜR KRAFTFAHRZEUG
FOOT-REST FOR VEHICLE, EQUIPPED WITH FRANGIBLE AEREA

(30) Priorité: 08.11.2019 FR 1912580
(43) Date de publication de la demande: 14.09.2022
(73) Titulaire: PSA Automobiles SA, 78300 Poissy (FR)
(72) Inventeur: LE NORCY, Yohann, 90300 Valdoie (FR); TAVERNIER, Luc, 25470 Trevillers (FR); DUFRESNE, Andre, 25200 Montbeliard (FR); LACOUR, Mathieu, 90000 Belfort (FR)
(86) Numéro de dépôt international: PCT/FR2020/051950
(87) Numéro de publication internationale: WO 2021/089930

(56) Documents cités:
- DE-A1-102008 025 839
- FR-A1- 2 820 699
- JP-A- 2016 113 120

## Description

### [Domaine technique]

La présente invention revendique la priorité de la demande française 1912580 déposée le 08 Novembre 2019 dont le contenu (texte, dessins et revendications) est ici incorporé par référence.

La présente invention concerne un repose-pied destiné à être implanté à l'intérieur de l'habitacle d'un véhicule, notamment de type automobile, entre une partie du tablier et le plancher de ce véhicule.

### [Technique antérieure]

Un tel repose-pied de véhicule automobile comporte classiquement une semelle plane rigide adaptée pour recevoir le pied du conducteur du véhicule, ladite semelle étant inclinée vers l'avant du véhicule selon un angle prédéterminé par rapport au plancher.

Lors d'un choc frontal du véhicule, notamment à vitesse élevée, les déformations du bloc avant du véhicule ainsi que le déplacement d'éléments rigides, tel que le moteur, vers l'arrière du véhicule provoquent des intrusions souvent importantes au niveau du tablier et faibles au niveau du plancher du véhicule. Cette variation des profils d'intrusion à différentes hauteurs provoque l'augmentation de l'angle d'inclinaison de la semelle.

En outre, dans ce type de collisions frontales, les corps des passagers, et plus particulièrement du conducteur, se déplacent brutalement vers l'avant du véhicule, même s'ils sont retenus par des ceintures de sécurité.

Sous l'effet combiné de l'intrusion du tablier et de l'avancée du conducteur, le pied gauche du conducteur, en appui sur la semelle inclinée du repose-pied, subit une dorsiflexion susceptible d'engendrer des lésions importantes au niveau de la cheville.

Pour éviter cette dorsiflexion du pied gauche du conducteur lors d'une collision frontale du véhicule, le document JP11342780-A propose un repose-pied sous la forme d'une semelle rigide plane dont la partie inférieure est liée au plancher du véhicule automobile par l'intermédiaire d'une liaison pivot et sous laquelle un système actif pyrotechnique est prévu. Ce système se déclenche lors d'une collision et provoque une rotation de la semelle autour de la base.

Cette solution ne résout pas de manière satisfaisante le problème d'augmentation de l'inclinaison évoquée ci-dessus. En effet, lors d'une collision d'un véhicule contre un obstacle, des efforts considérables sont appliqués contre le véhicule de sorte qu'un dimensionnement très important du système serait nécessaires pour empêcher le recul du montant avant du véhicule ou celui de la traverse.

Les documents JP2016 113120 et DE 10 2008 025 839 décrivent d'autres conceptions de repose-pied permettant de réduire les blessures en cas de choc.

On connaît également du document FR 2 820 699 A1 un repose-pied comportant une semelle rigide plane destinée à supporter le pied d'un conducteur en étant inclinée vers l'avant du véhicule selon un angle prédéterminé par rapport au plancher, et dont l'extrémité supérieure est articulée au tablier par une liaison de type pivot.

Ce repose-pied comporte également une patte plane s'étendant horizontalement vers l'arrière dans le prolongement de l'extrémité inférieure de la semelle, et sous laquelle est fixée un patin reposant librement sur le plancher

Sous l'effet d'un choc frontal, la partie haute du tablier rentre dans l'habitacle, et entraine la semelle vers l'arrière qui translate en conservant sensiblement la même inclinaison par rapport au plancher grâce à la liaison pivot et au glissement du patin fixé à la patte sur le plancher.

Un tel repose-pied actif permet de ne pas refermer l'angle du pied gauche du conducteur et ainsi de limiter les lésions au niveau de sa cheville.

Malheureusement à l'usage, le glissement vers l'arrière de la patte et du patin lui étant fixé peut être gêné par un renfort saillant du plancher ou par le tapis d'isolation phonique classiquement rapporté sur le plancher du véhicule et dont l'un des bords s'étend en regard de l'extrémité arrière de la patte du repose-pied.

En cas de choc frontal, l'extrémité arrière de la patte du repose-pied vient en butée contre ce renfort ou ce bord du tapis d'isolation phonique qui empêche un recul suffisant de cette patte sur le plancher pour conserver l'inclinaison de la semelle et éviter les lésions de la cheville gauche du conducteur.

### [Exposé de l'invention]

La présente invention vise donc à améliorer la situation.

Elle propose à cet effet un repose-pied destiné à être implanté à l'intérieur de l'habitacle d'un véhicule, notamment de type automobile, entre une partie du tablier et le plancher de ce véhicule, ledit repose-pied comportant une semelle plane rigide prévue pour supporter le pied d'un conducteur en étant inclinée vers l'avant du véhicule selon un angle d'inclinaison prédéterminé par rapport audit plancher, ainsi qu'une patte plane rigide s'étendant horizontalement vers l'arrière dans le prolongement de l'extrémité inférieure de ladite semelle et prévue pour reposer directement sur ledit plancher ou sur un tapis d'isolation phonique le recouvrant ;
caractérisé en ce qu'il comporte une zone frangible agencée transversalement le long de l'intersection entre ladite semelle inclinée et ladite patte horizontale, cette zone frangible étant configurée pour rompre sous une contrainte longitudinale de cisaillement prédéterminée.

La présence de cette zone frangible permet, lorsque la semelle du repose-pied est entrainée vers l'arrière sous l'effet d'un choc frontal à vitesse élevée tandis que la patte horizontale est empêchée de coulisser vers l'arrière par le tapis d'isolation phonique ou par un autre obstacle saillant du plancher, de désolidariser ces deux éléments du repose-pied de sorte que la semelle vienne glisser à translation sur et le long de la patte en conservant sensiblement son inclinaison initiale.

Le repose-pied selon l'invention évite ainsi de refermer l'angle du pied gauche du conducteur et limite considérablement les risques de lésions au niveau de sa cheville.

Selon des caractéristiques préférées dudit repose-pied selon l'invention :
- ladite zone frangible comporte une fente s'étendant transversalement sur la majeure partie de la largeur dudit repose-pied ;
- ladite zone frangible comporte une pluralité de fentes alignées transversalement de manière discontinue sur la largeur dudit repose-pied ;
- ladite zone frangible comporte une rainure s'étendant transversalement sur la majeure partie de la largeur dudit repose-pied ;
- ladite zone frangible comporte une pluralité de rainures alignées transversalement de manière discontinue sur la largeur dudit repose-pied ;
- l'extrémité supérieure de ladite semelle présente des orifices aptes à permettre sa fixation par vissage sur une traverse latérale de tablier ;
- l'extrémité supérieure de ladite semelle comprend des moyens de liaison de type charnière permettant de l'articuler à pivotement sur une traverse latérale de tablier ;
- ledit repose-pied comporte deux parois latérales verticales agencées s'étendant vers l'avant de part et d'autre de ladite semelle, ainsi qu'un réseau de nervures de rigidification entrecroisées s'étendant en avant de ladite semelle entre lesdites parois latérales ;
- ladite semelle comprend des fenêtres de clippage aptes à permettre l'encliquetage des agrafes de fixation d'un enjoliveur ; et/ou
- ledit enjoliveur est venu de moulage d'une seule pièce à partir d'un matériau thermoplastique éventuellement renforcé en fibres naturelles et/ou synthétiques.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] représente une vue de dessus en perspective d'un repose-pied conforme à l'invention monté dans l'habitacle d'un véhicule automobile ; et
[Fig 2] est une vue de coupe selon un plan longitudinal vertical du repose-pied de la figure 1.

### [Description détaillée]

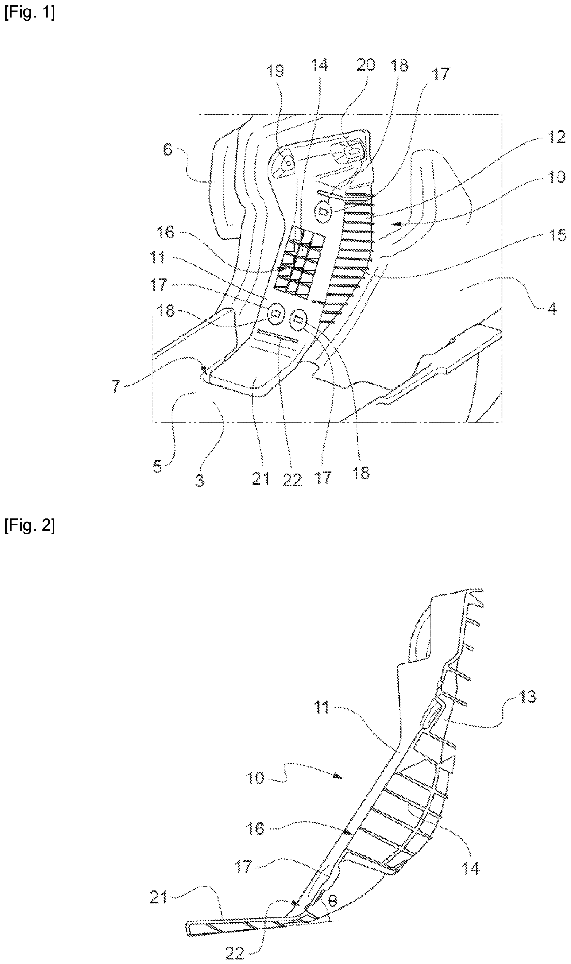

En référence à la figure 1, le repose-pied 10 selon l'invention est prévu pour être implanté dans l'habitacle d'un véhicule à proximité du pied avant gauche, entre une partie du tablier et le plancher 3 de ce véhicule recouverts chacun par un tapis d'isolation phonique correspondant 4, 5.

Dans la description qui va suivre et par convention, les termes « inférieur », « supérieur », « longitudinal », « latéral » et « transversal » seront définis par rapport à la position de montage de ce repose-pied 10 dans un tel véhicule.

Les termes « externe » et « interne » seront quant à eux utilisés pour définir la position relative d'un élément par référence au plan longitudinal médian du véhicule. L'élément le plus proche de ce plan sera ainsi qualifié d'interne par opposition à l'autre élément plus éloigné de ce même plan qui sera quant à lui qualifié d'externe.

Venu avantageusement de moulage d'une seule pièce à partir d'un matériau thermoplastique éventuellement renforcé en fibres naturelles et/ou synthétiques, ce repose-pied 10 comporte une semelle rigide plane 11 destinée à supporter le pied (non représenté) d'un conducteur en étant inclinée vers l'avant du véhicule selon un angle d'inclinaison prédéterminé θ (figure 2) par rapport au plancher 3, ainsi que deux parois latérales verticales 12, 13 s'étendant vers l'avant de part et d'autre de la semelle 11.

Tel qu'illustré sur les figures 1 et 2, il comprend également un réseau de nervures de rigidification entrecroisées 14 s'étendant en avant de la semelle 11 entre les parois latérales 12, 13.

Comme cela est bien visible sur la figure 1, d'autres nervures de mise au point 15 s'étendent parallèlement les unes aux autres depuis la face extérieure de la paroi latérale interne du repose-pied 10.

La semelle rigide 11 présente dans sa partie centrale une découpe rectangulaire 16 ayant pour fonction de faciliter le processus de démoulage du repose-pied 10 et au travers de laquelle on peut distinguer une partie du réseau de nervures de rigidification 14.

Comme cela est bien visible sur la figure 1, trois empreintes sensiblement circulaires 17 sont ménagées au dessus et au dessous de la découpe rectangulaire 16, ces dernières présentant chacune une fenêtre rectangulaire de clippage correspondante 18 prévue pour l'encliquetage, au travers d'un revêtement d'aspect non représenté de type moquette recouvrant les tapis d'isolation phonique 4, 5 et le repose-pied 10, d'une agrafe de fixation d'un enjoliveur non représenté.

Toujours en référence à cette figure 1, la semelle 11 présente au niveau de son extrémité supérieure deux orifices 19, 20 destinés à permettre sa fixation par vissage sur une traverse latérale 6 du tablier.

Le repose-pied 10 comporte également une patte plane rigide 21 s'étendant horizontalement vers l'arrière dans le prolongement de l'extrémité inférieure de la semelle 11.

Cette patte plane 21 est prévue pour reposer directement sur le plancher 3 du véhicule ou sur le tapis d'isolation phonique 5 recouvrant ce plancher 3, en étant au moins partiellement logée dans une découpe ou une empreinte 7 ménagée dans ce tapis d'isolation phonique 5.

Selon l'invention, le repose-pied 10 présente une zone frangible agencée transversalement le long de l'intersection entre la semelle inclinée 11 et la patte horizontale 21.

Cette zone frangible, configurée pour rompre sous une contrainte longitudinale de cisaillement prédéterminée, comprend en l'espèce une fente 22 s'étendant transversalement sur la majeure partie de la largeur du repose-pied 10.

Cette fente 22 présente avantageusement une longueur comprise entre 60 et 90 mm (égale par exemple à 75 mm) pour une hauteur comprise entre 3 et 6 mm (égale par exemple à 5 mm).

Sous l'effet d'un choc frontal à vitesse élevée, la partie haute du tablier rentre dans l'habitacle et entraine la semelle 11 du repose-pied 10 vers l'arrière ainsi que la patte 21 dont l'extrémité arrière vient buter contre l'un des bords de la découpe ou de l'empreinte 7 ménagée dans le tapis d'isolation phonique 5 (voire également contre un élément du renfort saillant du plancher 3).

Les deux forces de poussée s'exerçant en sens contraire respectivement sur la semelle 11 et sur la patte 21 génèrent une contrainte de cisaillement au niveau de la zone frangible qui rompt de sorte à libérer le mouvement de la semelle 11 dont l'extrémité inférieure vient glisser à translation sur et le long de la patte 21 en restant inclinée par rapport au plancher 3 selon une inclinaison proche de l'angle θ.

Le fait que le repose-pied 10 soit en plastique permet en outre de limiter considérablement les frottements s'exerçant entre la patte 21 et la semelle 11 lors du glissement de cette dernière, de sorte à faciliter son recul et préserver son angle d'inclinaison.

Selon des variantes de réalisation non représentées, la zone frangible est conformée autrement. Elle peut par exemple comporter une pluralité de fentes alignées transversalement de manière discontinue sur la largeur du repose-pied.

Cette zone frangible peut également comporter une rainure s'étendant transversalement sur la majeure partie de la largeur du repose-pied, ou bien encore plusieurs rainures alignées transversalement de manière discontinue sur la largeur de ce repose-pied.

Selon d'autres variantes de réalisation non représentées, l'extrémité supérieure de la semelle rigide comprend des moyens de liaison de type charnière permettant de l'articuler à pivotement sur la traverse latérale de tablier.

## Revendications

1. Repose-pied destiné à être implanté à l'intérieur de
l'habitacle d'un véhicule, notamment de type automobile, entre une partie du tablier et le plancher (3) de ce véhicule, ledit repose-pied comportant une semelle plane rigide (11) prévue pour supporter le pied d'un conducteur en étant inclinée vers l'avant du véhicule selon un angle d'inclinaison prédéterminé (θ) par rapport audit plancher (3), ainsi qu'une patte plane rigide (21) s'étendant horizontalement vers l'arrière dans le prolongement de l'extrémité inférieure de ladite semelle (11) et prévue pour reposer directement sur ledit plancher (3) ou sur un tapis d'isolation phonique (5) le recouvrant ;
**caractérisé en ce qu'**il comporte une zone frangible agencée transversalement le long de l'intersection entre ladite semelle inclinée (11) et ladite patte horizontale (21), cette zone frangible étant configurée pour rompre sous une contrainte longitudinale de cisaillement prédéterminée.

2. Repose-pied selon la revendication 1, **caractérisé en ce que** ladite zone frangible comporte une fente (22) s'étendant transversalement sur la majeure partie de la largeur dudit repose-pied.

3. Repose-pied selon la revendication 1, **caractérisé en ce que** ladite zone frangible comporte une pluralité de fentes alignées transversalement de manière discontinue sur la largeur dudit repose-pied.

4. Repose-pied selon la revendication 1, **caractérisé en ce que** ladite zone frangible comporte une rainure s'étendant transversalement sur la majeure partie de la largeur dudit repose-pied.

5. Repose-pied selon la revendication 1, **caractérisé en ce que** ladite zone frangible comporte une pluralité de rainures alignées transversalement de manière discontinue sur la largeur dudit repose-pied.

6. Repose-pied selon l'une des revendications 1 à 5, **caractérisé en ce que** l'extrémité supérieure de ladite semelle présente des orifices (19, 20) aptes à permettre sa fixation par vissage sur une traverse latérale de tablier.

7. Repose-pied selon l'une des revendications 1 à 5, **caractérisé en ce que** l'extrémité supérieure de ladite semelle comprend des moyens de liaison de type charnière permettant de l'articuler à pivotement sur une traverse latérale de tablier.

8. Repose-pied selon l'une des revendications 1 à 7, **caractérisé en ce qu'**il comporte deux parois latérales verticales (12, 13) agencées s'étendant vers l'avant de part et d'autre de ladite semelle (11), ainsi qu'un réseau de nervures de rigidification entrecroisées (14) s'étendant en avant de ladite semelle (11) entre lesdites parois latérales (12, 13).

9. Repose-pied selon l'une des revendications 1 à 8, **caractérisé en ce que** ladite semelle (11) comprend des fenêtres de clippage (18) aptes à permettre l'encliquetage des agrafes de fixation d'un enjoliveur.

10. Repose-pied selon l'une des revendications 1 à 9, **caractérisé en ce qu'**il est venu de moulage d'une seule pièce à partir d'un matériau thermoplastique éventuellement renforcé en fibres naturelles et/ou synthétiques.

## Patentansprüche

1. Fußstütze zum Einsetzen in den Fahrgastraum eines Kraftfahrzeugs, insbesondere eines Kraftfahrzeugs, zwischen einem Teil der Schürze und dem Boden (3) dieses Kraftfahrzeugs, wobei die Fußstütze eine starre ebene Sohle (11) aufweist, die dazu vorgesehen ist, den Fuß eines Fahrers unter einem Neigungswinkel nach vorn des Kraftfahrzeugs zu tragen (θ) in Bezug auf den Boden (3) sowie eine starre ebene Lasche (21), die sich horizontal nach hinten in der Verlängerung des unteren Endes der Sohle (11) erstreckt und unmittelbar auf dem Boden (3) oder auf einem ihn überdeckenden schalldämmenden Teppich (5) aufliegt;
Es umfasst eine zerbrechliche Zone, die quer entlang des Schnittpunkts zwischen der geneigten Sohle (11) und der horizontalen Lasche (21) angeordnet ist, wobei diese zerbrechliche Zone so konfiguriert ist, dass sie unter einer vorbestimmten Längsscherspannung bricht.

2. Fußstütze nach Anspruch 1, **dadurch gekennzeichnet, dass** die zerbrechliche Zone einen Schlitz (22) aufweist, der sich quer über den Großteil der Breite der Fußstütze erstreckt.

3. Fußstütze nach Anspruch 1, **dadurch gekennzeichnet, dass** die zerbrechliche Zone eine Vielzahl von Schlitzen aufweist, die quer über die Breite der Fußstütze diskontinuierlich ausgerichtet sind.

4. Fußstütze nach Anspruch 1, **dadurch gekennzeichnet, dass** die zerbrechliche Zone eine Nut aufweist, die sich quer über den größten Teil der Breite der Fußstütze erstreckt.

5. Fußstütze nach Anspruch 1, **dadurch gekennzeichnet, dass** die zerbrechliche Zone eine Vielzahl von Nuten aufweist, die quer über die Breite der Fußstütze diskontinuierlich ausgerichtet sind.

6. Fußstütze nach einem der Ansprüche 1 bis 5,
**Dadurch gekennzeichnet, dass** das obere Ende der Sohle Öffnungen (19,20) aufweist, die ihre Befestigung durch Verschraubung auf einem seitlichen Querträger der Schürze ermöglichen.

7. Fußstütze nach einem der Ansprüche 1 bis 5,
**Dadurch gekennzeichnet, dass** das obere Ende der Sohle scharnierartige Verbindungsmittel aufweist, die es ermöglichen, sie schwenkbar an einem seitlichen Querträger der Schürze zu befestigen.

8. Fußstütze nach einem der Ansprüche 1 bis 7,
Es umfasst zwei vertikale Seitenwände (12,13), die sich nach vorn auf beiden Seiten der Sohle (11) erstrecken, sowie ein Feld von Versteifungsrippen (14), die sich vor der Sohle (11) zwischen den Seitenwänden (12,13) erstrecken.

9. Fußstütze nach einem der Ansprüche 1 bis 8,
**Dadurch gekennzeichnet, dass** die Sohle (11) Klippfenkel (18) aufweist, die geeignet sind, das Einrasten der Befestigungsklammern einer Zierleiste zu ermöglichen.

10. Fußstütze nach einem der Ansprüche 1 bis 9,
Es ist aus einem thermoplastischen Material, das gegebenenfalls mit natürlichen und/oder synthetischen Fasern verstärkt ist, einstückig geformt worden.

## Claims

1. A footrest intended to be installed inside the passenger compartment of a vehicle, in particular an automobile, between a part of the apron and the floor (3) of that vehicle, the footrest having a rigid flat sole (11) intended to support the foot of a driver by being inclined towards the front of the vehicle at an angle of inclination (21) extending horizontally to the rear of the lower end of the sole (11) and intended to rest directly on the floor (3) or on a soundproof mat (5);
**characterized by** a frangible zone arranged horizontally along the intersection between the said inclined sole (11) and the said horizontal leg (21), the frangible zone being configured to break under a predetermined longitudinal shear stress.

2. Ground under Claim 1, characterized that the free zone has a slot (22) extending across most of the width of the footrest.

3. A ground based on Claim 1, which is **characterized by** the fact that the free zone contains a plurality of slots aligned horizontally discontinuously on the width of the footrest.

4. The ground is based on Claim 1, which is **characterized by** the fact that the free zone has a groove extending across most of the width of the footrest.

5. Groundwork according to Claim 1, **characterized by** the fact that the free zone contains a plurality of grooves aligned horizontally discontinuously on the width of the said footrest.

6. Resting in one of the claims 1 to 5,
**characterized in that** the upper end of the sole has orifices (19,20) capable of securing it by screwing on a side flange of an apron.

7. Resting on one of the claims 1 to 5,
characterized as the upper end of the sole consists of hinge-like means of linking it to be rotated on a side-crossed apron.

8. Resting on one of the claims 1 to 7,
characterized as it has two vertical lateral walls (12,13) arranged forward on either side of the sole (11), and a network of cross-sectional stiffening ribs (14) extending forward of the sole (11) between the said lateral walls (12,13).

9. Resting in one of Claims 1 to 8,
**characterized in that** the sole (11) includes clippage windows (18) capable of allowing the binding staples of an embellishment to be attached.

10. Grounds in one of the claims 1 to 9,
characterized as it came from molding a single piece from a thermoplastic material possibly reinforced with natural and/or synthetic fibers.
